# EUROPÄISCHE PATENTSCHRIFT

(11) **EP 3 612 905 B1**
(45) Veröffentlichungstag und Bekanntmachung des Hinweises auf die Patenterteilung: **29.09.2021**
(21) Anmeldenummer: 18713132.1
(22) Anmeldetag: 22.03.2018
(51) Int. Cl.: G05D 1/02

(54) **VERFAHREN ZUM DETEKTIEREN BEWEGLICHER OBJEKTE IN EINER ANLAGE UND/ODER ZUR KOLLISIONSVERMEIDUNG IN EINER ANLAGE UND ANLAGE ZUR DURCHFÜHRUNG EINES SOLCHEN VERFAHRENS**
METHOD FOR DETECTING MOVING OBJECTS IN A SYSTEM AND/OR FOR PREVENTING COLLISIONS IN A SYSTEM, AND SYSTEM FOR CARRYING OUT A METHOD OF THIS KIND
PROCÉDÉ DE DÉTECTION D'OBJETS MOBILES DANS UNE INSTALLATION ET/OU D'ÉVITEMENT DE COLLISION DANS UNE INSTALLATION ET INSTALLATION DE MISE EN OEUVRE D'UN TEL PROCÉDÉ

(30) Priorität: 21.04.2017 DE 102017003893
(43) Veröffentlichungstag der Anmeldung: 26.02.2020
(73) Patentinhaber: SEW-EURODRIVE GmbH & Co. KG, 76646 Bruchsal (DE)
(72) Erfinder: SCHMIDT, Josef, 76676 Graben-Neudorf (DE); MALLIK, Quamrul Hasan, 76139 Karlsruhe (DE); ORTMANN, Andre, 59872 Eversberg (DE); SLISKOVIC, Maja, 76275 Ettlingen (DE)
(74) Vertreter: Tüngler, Eberhard
(86) Internationale Anmeldenummer: PCT/EP2018/025069
(87) Internationale Veröffentlichungsnummer: WO 2018/192683

(56) Entgegenhaltungen:
- US-A1- 2008 009 966
- US-A1- 2011 010 033
- US-B1- 6 205 380

## Beschreibung

Die Erfindung betrifft ein Verfahren zum Detektieren beweglicher Objekte in einer Anlage und/oder zur Kollisionsvermeidung in einer Anlage und Anlage zur Durchführung eines solchen Verfahrens.

Es ist allgemein bekannt, dass in einer Anlage stationäre Objekte, wie Wand oder fest angeordnete Komponenten, vorhanden sind und auch bewegbare Objekte, wie Menschen oder Behältnisse.

**Aus der** US 2008 / 0 009 966 A1 **ist als nächstliegender Stand der Technik eine Detektion der Besetzungsänderung bei einem System bekannt.**

**Aus der** US 2011/ 010033 A1 **ist ein autonomer mobiler Roboter mit Erzeugung einer Landkarte der Umgebung bekannt.**

**Aus der** US 6 205 380 B1 **ist ein Verfahren zur Erzeugung eines Arealplans mit Zellstruktur bekannt, wobei ein Mobilteil mit Wellenreflektierendem Sensor verwendet wird.**

Der Erfindung liegt daher die Aufgabe zugrunde, die Bestimmung beweglicher Objekte auszubilden und Kollision zu vermeiden.

Erfindungsgemäß wird die Aufgabe bei dem Verfahren nach den in Anspruch 1 und bei der Anlage nach den in Anspruch **4** angegebenen Merkmalen gelöst.

Von Vorteil ist dabei, dass eine einfache Bestimmung von beweglichen Objekten erreichbar ist. Insbesondere werden mehrere Messungen von jedem Mobilteil durchgeführt und die bestimmten Daten, also das Vorhandensein oder Nichtvorhandensein eines Objektes in einer jeweiligen Zelle, an einen übergeordneten Rechner übertragbar. Dort werden die Daten aller von den Mobilteilen durchgeführten Messungen zusammenfassend ausgewertet und das Ergebnis als Landkarte allen Mobilteilen zur Verfügung gestellt. Diese können dann eigenständig Daten von ihren aktuellen Messungen hinzufügen und davon abhängig weitere Maßnahmen ergreifen, wie Änderungen ihrer Sollbahnkurve zur Kollisionsvermeidung.

**Die anfängliche Benennung von erfassten Objekten als bewegliche Objekte bewirkt Kollisionsvermeidung. Wenn die Anzahl der Messungen dann den Schwellwert übersteigt, sind dann nicht bewegliche Objekte erkennbar und eine weiter verbesserte Bestimmung der Sollbahnkurve ist ausführbar.**

Bei einer vorteilhaften Ausgestaltung sind der erste und zweite Zählerstand in einem übergeordneten Rechner angeordnet, welcher mittels Kommunikationsverbindung mit den Rechnern der Mobilteile verbunden ist. Von Vorteil ist dabei, dass eine zentrale Bestimmung der beweglichen Objekte ausführbar ist und somit die Messdaten von verschiedenen Mobilteilen verwendbar ist.

Bei einer vorteilhaften Ausgestaltung ist das Positionsbestimmungssystem ein odometrisches System. Von Vorteil ist dabei, dass eine einfache Ausführung ermöglicht ist.

Erfindungsgemäß wird eine entsprechende Landkarte vom übergeordneten Rechner erstellt und den Rechnern der Mobilteile übermittelt. Von Vorteil ist dabei, dass die zentral zusammengefasste Information an alle Rechner komprimiert übermittelbar ist und dort verwendbar ist.

Erfindungsgemäß wird durch eine oder mehrere aktuelle Messungen in Ergänzung zur Landkarte vom Rechner eines der Mobilteile die Bahnkurve des beweglichen Objektes bestimmt und/oder prognostiziert,
und, zur Kollisionsvermeidung, abhängig von dieser Bahnkurve die Sollbahnkurve des Mobilteils bestimmt wird. Von Vorteil ist dabei, dass eine Kollision in einfacher Weise vermeidbar ist.

Wichtige Merkmale bei der Anlage zur Durchführung eines vorgenannten Verfahrens sind, dass der Sensor ein Laserscanner ist
und/oder dass das jeweilige Mobilteil einen vom Rechner des Mobilteils lenkbaren und steuerbaren Antrieb aufweist.

Von Vorteil ist dabei, dass eine einfache Herstellung des Mobilteils ausführbar ist.

Die Erfindung wird nun anhand von Abbildungen näher erläutert:

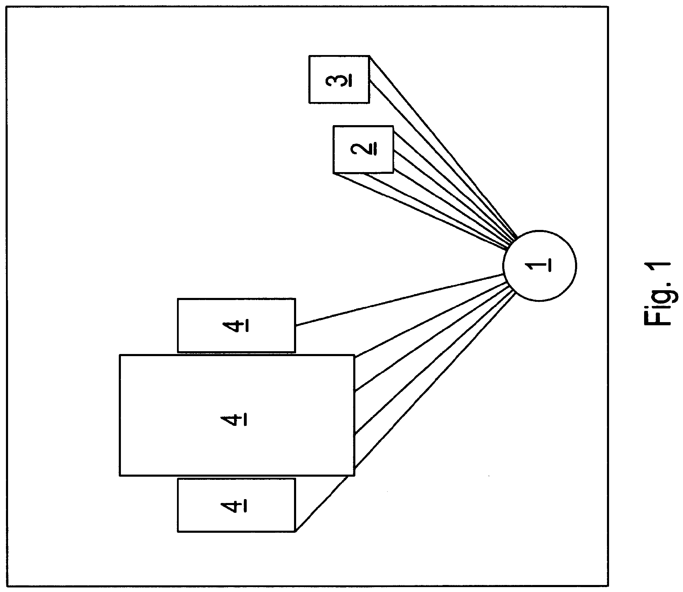

In der Figur 1 ist die Draufsicht auf eine Anlage schematisch skizziert, wobei mittels eines Sensors 1 Objekte (2, 3, 4) detektiert werden.
In der Figur 2 ist eine erstellte Landkarte gezeigt, in welcher die Objekte (2,3, 4) dargestellt sind.
In der Figur 3 sind im Unterschied zur Figur 2 nur die unbeweglichen Objekte 4 dargestellt.

Wie in den Figuren gezeigt, weist die Anlage bewegliche Objekte (2, 3) und unbewegliche Objekte 4 auf.

In der Anlage sind Mobilteile vorgesehen, die sich in der Anlage bewegen, um logistische oder andere Aufgaben zu erledigen.

Jedes der Mobilteile weist ein mit einem Rechner des Mobilteils verbundenes Positionsbestimmungssystem auf, so dass in einem Rechner des jeweiligen Mobilteils die jeweils aktuelle Position des Mobilteils bekannt ist.

Das Positionsbestimmungssystem arbeitet beispielsweise odometrisch, kann aber auch als Triangulationsverfahren oder dergleichen, ausgeführt werden.

Jedes der Mobilteile weist zumindest einen Sensor 1, mit welchem die Entfernung und Richtung von detektierbaren Objekten (2,3,4) bestimmbar ist.

Der Sensor 1 ist vorzugsweise als Laserscanner ausgeführt. Dabei wird der ausgesendete Laserstrahl vom jeweiligen Objekt (2, 3, 4) zumindest teilweise rückgestreut oder reflektiert, so dass die Richtung und Entfernung des Objekts (2, 3, 4) relativ zum Laserscanner bestimmbar ist. Mit der bekannten Position des Mobilteils ist somit vom Rechner der Ortsbereich des Objektes (2, 3, 4) bestimmbar.

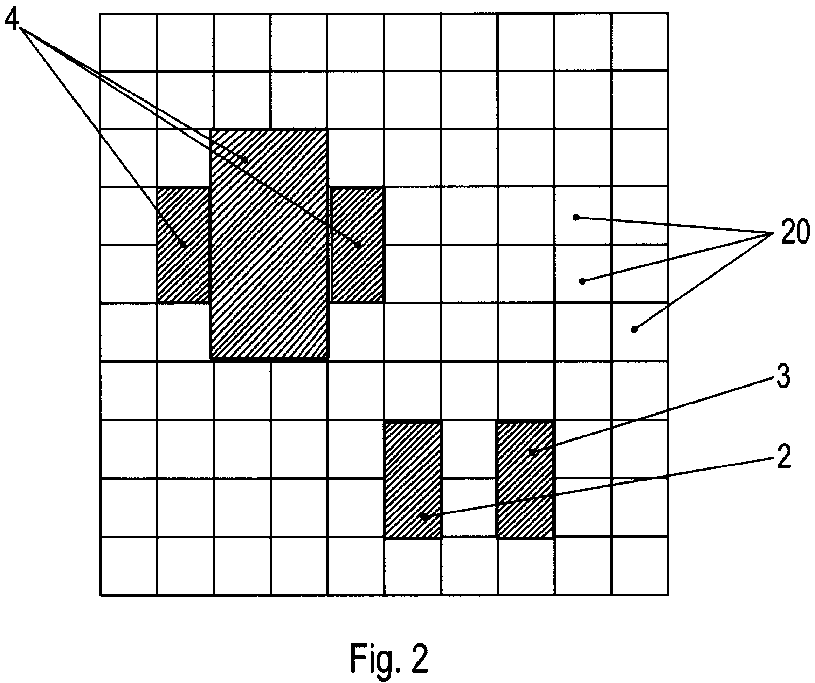

In einer in Figur 2 gezeigten Landkarte der Anlage, welche in Zellen 20, also Flächenzellen, aufgeteilt ist, wird vom Rechner das Vorhandensein eines jeweils detektierten Objektes (2, 3, 4) eingetragen.

Es wird also zu jeder Zelle notiert, ob bei der Messung ein Objekt (2, 3, 4) oder ein Teil hiervon in der jeweiligen Zelle 20 festgestellt wurde oder nicht.

Diese Landkarteninformation wird über einen Kommunikationskanal, beispielsweise Funkverbindung oder mittels modulierter Lichtkommunikation, an einen übergeordneten Rechner übertragen.

Das Mobilteil wiederholt diese Messung zeitlich wiederkehrend. Beispielsweise werden pro Sekunde mehrere Messungen ausgeführt und somit mehrere Landkarten gemäß Figur 2 erstellt.

Dieser übergeordnete Rechner erhält auf diese Weise von jedem der in der Anlage sich bewegenden oder bewegbaren Mobilteile für jede Messung die entsprechenden Landkartendaten.

Im übergeordneten Rechner wird aus den übermittelten Daten bestimmt, wie oft für eine jeweilige Zelle ein Objekt detektiert wurde.

Hierzu wird jeder Zelle ein erster und ein zweiter Zähler zugeordnet. Für jede Messung, bei welcher in der jeweiligen Zelle ein Objekt (2, 3, 4) detektiert wurde, wird der erste Zähler inkrementiert. Für jede Messung, bei welcher in der jeweiligen Zelle zwar der Raumbereich der Zelle vom Sensor erfasst war, aber kein Objekt (2, 3, 4) detektiert wurde, wird der zweite Zähler inkrementiert.

Somit ist für jede Zelle der Quotient aus dem Zählerstand des ersten Zählers und aus dem Zählerstand des zweiten Zählers bestimmbar.

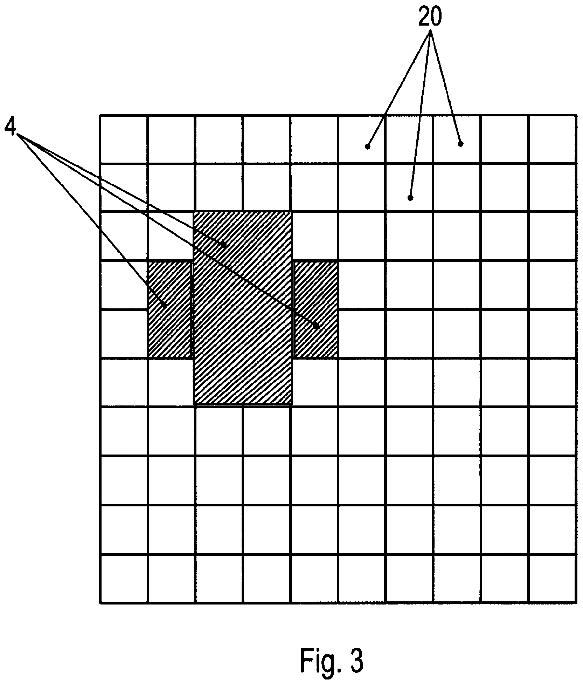

Daraus wird eine Landkarte gemäß Figur 3 vom übergeordneten Rechner bestimmt, wobei nur bei Überschreiten eines Schwellwertes ein Objekt in der Zelle dargestellt wird, also die Zelle schwarz gefärbt dargestellt wird.

Somit sind auf diese Weise unbewegliche Objekte 4 in der Landkarte nach Figur 3 eingezeichnet, aber bewegliche Objekte (2, 3) nicht.

Diese Landkarteninformation ist auch an die Rechner der Mobilteile übermittelbar, so dass diese auch eigenständig aktuell durchgeführten Messungen auswerten können. Insbesondere sind die aktuell detektierten, aber nicht in der Landkarte nach Figur 3 sichtbaren Objekte 2 und 3 als bewegliche Objekte erkennbar.

Darüber hinaus ist eine Bahnkurve der beweglichen Objekte (2, 3) aus zwei oder mehr aktuellen, zeitlich aufeinander folgenden Messungen bestimmbar, so dass eine Kollisionsvermeidung erreichbar ist. Denn das Mobilteil ist in Abhängigkeit von der prognostizierten Bahnkurve der Objekte (2, 3) bewegbar. Beispielsweise verändert das Mobilteil von der prognostizierten Bahnkurve der Objekte (2, 3) abhängig seine Sollbahnkurve entsprechend ab.

**Vorzugsweise wird aber die vorgenannte Unterscheidung in bewegliche oder unbewegliche Objekte nur getroffen, wenn die Summe der Zählerwerte der beiden Zähler einen Schwellwert übersteigt. Anfangs, wenn also noch wenige Messungen ausgeführt worden sind, unterschreitet die Summe den Schwellwert. In diesem Anfangsbereich wird zunächst angenommen, dass ein detektiertes Objekt beweglich sei. Erst wenn später mehr Messungen ausgeführt worden sind, werden die unbeweglichen Objekte erkannt. Hierbei ist dann eine ausreichende Sicherheit gewährleistbar.**

**Dadurch, dass aber detektierte Objekte zumindest als bewegliche Objekte anfangs benannt werden, ist Kollisionsvermeidung erreichbar.**

### Bezugszeichenliste

- 1: Sensor, insbesondere Laserscanner
- 2: bewegliches Objekt
- 3: bewegliches Objekt
- 4: unbewegliches Objekt
- 20: Zellen

## Patentansprüche

1. Verfahren zum Detektieren beweglicher Objekte in einer Anlage und/oder zur Kollisionsvermeidung in einer Anlage,
wobei auf einer Verfahrfläche innerhalb der Anlage Mobilteile bewegbar angeordnet sind, die jeweils zumindest einen Sensor (1), einen Rechner und ein mit dem Rechner verbundenes Positionsbestimmungssystem aufweisen,
wobei jeder Rechner mittels eines jeweiligen Kommunikationskanals mit einem übergeordneten Rechner der Anlage zum Datenaustausch verbunden ist,
wobei die Verfahrfläche in Zellen (20) eingeteilt wird oder ist, wobei jede Zelle (20) einem Flächenbereich der Verfahrfläche eineindeutig zugeordnet ist,
wobei jeder Zelle (20) ein erster und ein zweiter Zähler zugeordnet ist,
**dadurch gekennzeichnet, dass** der Startwert des ersten und des zweiten Zählers jeweils gleich Eins ist,
**wobei** mittels der Sensoren (1) der Mobilteile jeweilige Messungen durchgeführt werden,
wobei bei jeder von einem jeweiligen Mobilteil durchführten Messung
- relativ auf das jeweilige Mobilteil bezogen Entfernung und Richtung von in der Anlage sich befindenden Objekten bestimmt werden und unter Berücksichtigung der jeweiligen aktuellen Position des jeweiligen Mobilteils die jeweilige Position des jeweiligen Objekts bestimmt wird,
- wobei daraus diejenigen Zellen (20) bestimmt werden, auf welchen ein Objekt detektiert wurde, und der Zählerstand des ersten Zählers dieser Zellen (20) jeweils inkrementiert wird,
- und wobei diejenigen Zellen (20) bestimmt werden, auf welchen kein Objekt detektiert wurde, und der Zählerstand des zweiten Zählers dieser Zellen (20) jeweils inkrementiert wird,
wobei für jede Zelle der Quotient aus dem Zählerstand des ersten Zählers und aus dem Zählerstand des zweiten Zählers gebildet wird,
wobei abhängig vom Wert des Quotienten der jeweiligen Zelle
- das Vorhandensein eines unbeweglichen Objektes,
- das Vorhandensein eines beweglichen Objektes oder
- das Nicht-Vorhandensein eines Objektes zugeordnet wird, wenn die Summe aus dem Zählerstand des ersten Zählers und aus dem Zählerstand des zweiten Zählers einen Schwellwert übertrifft,
und wobei abhängig vom Wert des Quotienten der jeweiligen Zelle (20)
- das Vorhandensein eines beweglichen Objektes (2, 3) oder ansonsten
- das Nicht-Vorhandensein eines Objektes (2, 3)
zugeordnet wird, wenn die Summe aus dem Zählerstand des ersten Zählers und aus dem Zählerstand des zweiten Zählers den Schwellwert unterschreitet,
wird somit angenommen, dass ein detektiertes Objekt (2, 3) beweglich ist, wenn noch wenige Messungen ausgeführt worden sind,
wobei eine entsprechende Landkarte vom übergeordneten Rechner erstellt wird und den Rechnern der Mobilteile übermittelt wird,
wobei die Landkarte in die jeweiligen Zellen (20) aufgeteilt wird,
wobei durch eine oder mehrere aktuelle Messungen in Ergänzung zur Landkarte vom Rechner eines der Mobilteile die Bahnkurve des jeweiligen beweglichen Objektes (2, 3) prognostiziert wird,
und zur Kollisionsvermeidung abhängig von dieser Bahnkurve die Sollbahnkurve des Mobilteils bestimmt wird.

2. Verfahren nach Anspruch 1,
**dadurch gekennzeichnet, dass**
der erste und zweite Zählerstand in einem übergeordneten Rechner angeordnet sind, welcher mittels Kommunikationsverbindung mit den Rechnern der Mobilteile verbunden ist.

3. Verfahren nach mindestens einem der vorangegangenen Ansprüche,
**dadurch gekennzeichnet, dass**
das Positionsbestimmungssystem ein odometrisches System ist.

4. Anlage konfiguriert zur Durchführung eines Verfahrens nach mindestens einem der vorangegangenen Ansprüche,
- wobei die Anlage Mobilteile und Objekte (2, 3) aufweist,
- wobei die Mobilteile auf einer Verfahrfläche innerhalb der Anlage bewegbar angeordnet sind,
- wobei die Mobilteile zumindest einen Sensor (1), einen Rechner und ein mit dem Rechner verbundenes Positionsbestimmungssystem aufweisen,
- wobei jeder Rechner mittels eines jeweiligen Kommunikationskanals mit einem übergeordneten Rechner der Anlage zum Datenaustausch verbunden ist,
**dadurch gekennzeichnet, dass**
der Sensor (1) ein Laserscanner ist
und/oder dass das jeweilige Mobilteil einen vom Rechner des Mobilteils lenkbaren und steuerbaren Antrieb aufweist.

## Claims

1. Method for detecting moving objects in a facility and/or for preventing collisions in a facility,
wherein mobile parts are movably arranged on a travel surface within the facility and each comprise at least one sensor (1), a computer and a position-determination system connected to the computer,
wherein each computer is connected for data exchange to a superordinate computer of the facility, by means of a respective communication channel,
wherein the travel surface is divided into cells (20), wherein each cell (20) is bijectively assigned to a surface region of the travel surface,
wherein each cell (20) is assigned a first and a second counter,
**characterised in that** the starting value of the first and of the second counter is exactly one in each case,
wherein respective measurements are taken by means of the sensors (1) of the mobile parts,
wherein, for each measurement taken by a particular mobile part,
- the distance and direction of objects located in the facility are determined relative to the relevant mobile part, and the particular position of the object in question is determined in consideration of the particular current position of the relevant mobile part,
- wherein the cells (20) on which an object has been detected are determined on that basis, and the counter reading of the first counter of those cells (20) is increased respectively,
- and wherein the cells (20) on which no object has been detected are determined, and the counter reading of the second counter of those cells (20) is increased respectively,
wherein the quotient of the counter reading of the first counter and the counter reading of the second counter is formed for each cell,
wherein, depending on the value of the quotient of the particular cell,
- the presence of a non-moving object,
- the presence of a moving object or
- the absence of an object is allocated when the sum of the counter reading of the first counter and the counter reading of the second counter exceeds a threshold value,
and wherein, depending on the value of the quotient of the particular cell (20),
- the presence of a moving object (2, 3) or otherwise
- the absence of an object (2, 3)
is allocated when the sum of the counter reading of the first counter and the counter reading of the second counter is below the threshold value,
it is thus assumed that a detected object (2, 3) is moving if a small number of measurements have been taken,
wherein a corresponding map is prepared by the superordinate computer and is communicated to the computers of the mobile parts,
wherein the map is divided up into the relevant cells (20),
wherein the trajectory of the relevant moving object (2, 3) is predicted by the computer of one of the mobile parts as a result of one or more current measurements in addition to the map,
and the target trajectory of the mobile part is determined on the basis of said trajectory for the purpose of collision prevention.

2. Method according to claim 1,
**characterised in that**
the first and second counter readings are arranged in a superordinate computer, which is connected to the computers of the mobile parts by means of a communications link.

3. Method according to at least one of the preceding claims,
**characterised in that**
the position-determination system is an odometry system.

4. Facility configured to carry out a method according to at least one of the preceding claims,
- wherein the facility comprises mobile parts and objects (2, 3),
- wherein the mobile parts are movably arranged on a travel surface within the facility,
- wherein the mobile parts comprise at least one sensor (1), a computer and a position-determination system connected to the computer,
- wherein each computer is connected for data exchange to a superordinate computer of the facility, by means of a respective communication channel,
**characterised in that**
the sensor (1) is a laser scanner
and/or **in that** each mobile part comprises a drive that can be steered and controlled by the computer of the mobile part.

## Revendications

1. Procédé de détection d'objets mobiles dans une installation et/ou d'évitement de collision dans une installation,
dans lequel, sur une surface de déplacement à l'intérieur de l'installation, des parties mobiles sont disposées de façon mobile et présentent respectivement au moins un capteur (1), un ordinateur et un système de détermination de position relié à l'ordinateur,
chaque ordinateur étant relié au moyen d'un canal de communication respectif à un ordinateur de niveau supérieur de l'installation pour l'échange de données,
dans lequel la surface de déplacement sera ou est divisée en cellules (20), chaque cellule (20) étant associée de manière biunivoque à une zone de surface de la surface de déplacement,
chaque cellule (20) étant associée à un premier et à un deuxième compteur,
**caractérisé en ce que** la valeur de départ du premier et du deuxième compteur est respectivement égale à un,
des mesures respectives étant effectuées au moyen des capteurs (1) des parties mobiles, dans lequel,
à chaque mesure effectuée par une partie mobile respective
- la distance et la direction d'objets se trouvant dans l'installation sont déterminées par rapport à la partie mobile respective, et en tenant compte de la position actuelle respective de la partie mobile respective, la position respective de l'objet respectif est déterminée,
- sur cette base, les cellules (20) étant déterminées sur lesquelles un objet a été détecté, et la valeur de compteur du premier compteur de ces cellules (20) étant incrémentée respectivement,
- et les cellules (20) étant déterminées sur lesquelles aucun objet n'a été détecté, et la valeur de compteur du deuxième compteur de ces cellules (20) étant incrémentée respectivement,
pour chaque cellule, le quotient de la valeur de compteur du premier compteur sur la valeur de compteur du deuxième compteur étant formé,
dans lequel, en fonction de la valeur du quotient de la cellule respective,
- la présence d'un objet immobile,
- la présence d'un objet mobile, ou
- l'absence d'un objet est associée si la somme de la valeur de compteur du premier compteur et de la valeur de compteur du deuxième compteur dépasse une valeur seuil,
et dans lequel, en fonction de la valeur du quotient de la cellule respective (20),
- la présence d'un objet mobile (2, 3), ou sinon
- l'absence d'un objet (2, 3) est associée si la somme de la valeur de compteur du premier compteur et de la valeur de compteur du deuxième compteur soupasse la valeur seuil,
il est donc supposé qu'un objet détecté (2, 3) est mobile si quelques mesures encore ont été effectuées,
une carte correspondante étant créée par l'ordinateur de niveau supérieur et transmise aux ordinateurs des parties mobiles,
la carte étant divisée en cellules respectives (20),
dans lequel, par une ou plusieurs mesures actuelles en complément de la carte, l'ordinateur d'une des parties mobiles prédit la trajectoire de l'objet mobile respectif (2, 3),
et en fonction de cette trajectoire, la trajectoire théorique de la partie mobile est déterminée pour éviter les collisions.

2. Procédé selon la revendication 1, **caractérisé en ce que** la première et la deuxième valeur de compteur sont agencées sur un ordinateur de niveau supérieur qui est relié aux ordinateurs des parties mobiles au moyen d'une liaison de communication.

3. Procédé selon au moins l'une des revendications précédentes, **caractérisé en ce que** le système de détermination de position est un système d'odométrie.

4. Installation, configurée pour effectuer le procédé selon au moins l'une des revendications précédentes,
- l'installation présentant des parties mobiles et des objets (2, 3),
- les parties mobiles étant disposées de manière mobile sur une surface de déplacement à l'intérieur de l'installation,
- les parties mobiles présentant au moins un capteur (1), un ordinateur et un système de détermination de position relié à l'ordinateur,
- chaque ordinateur étant relié au moyen d'un canal de communication respectif à un ordinateur de niveau supérieur de l'installation pour l'échange de données,
**caractérisée en ce que** le capteur (1) est un scanner laser, et/ou **en ce que** la partie mobile respective présente un entraînement pouvant être dirigé et commandé par l'ordinateur de la partie mobile.
